(19) Europäisches Patentamt
European Patent Office
Office européen des brevets

(11) EP 4 047 067 A1

(12) **EUROPEAN PATENT APPLICATION**
published in accordance with Art. 153(4) EPC

(43) Date of publication:
**24.08.2022 Bulletin 2022/34**

(21) Application number: **20876676.6**

(22) Date of filing: **16.10.2020**

(51) International Patent Classification (IPC):
***C09J 133/04*** *(2006.01)* ***C09J 7/38*** *(2018.01)*
***C09J 11/00*** *(2006.01)* ***C08K 5/10*** *(2006.01)*

(52) Cooperative Patent Classification (CPC):
**C08F 220/20**

(86) International application number:
**PCT/KR2020/014152**

(87) International publication number:
**WO 2021/075899 (22.04.2021 Gazette 2021/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2019 KR 20190128579**

(71) Applicant: **Koza Novel Materials Korea Co., Ltd.**
**Seocho-gu**
**Seoul**
**06627 (KR)**

(72) Inventors:
- **KIM, Byeong Ho**
  **Daejeon 34122 (KR)**
- **KIM, Won Ho**
  **Daejeon 34122 (KR)**
- **SONG, Ho Kyung**
  **Daejeon 34122 (KR)**
- **SEO, Kwang Su**
  **Daejeon 34122 (KR)**
- **SHIN, Hwan Ho**
  **Daejeon 34122 (KR)**

(74) Representative: **Plasseraud IP**
**66, rue de la Chaussée d'Antin**
**75440 Paris Cedex 09 (FR)**

# (54) CURABLE COMPOSITION

(57) The present application relates to a curable composition and a use thereof. The present application can provide a curable composition that has excellent reliability including excellent light resistance, where such excellent reliability can be stably maintained for a long period of time even under severe conditions, and a use thereof.

EP 4 047 067 A1

## Description

### Technical Field

This application claims the benefit of priority based on Korean Patent Application No. 10-2019-0128579 filed on October 16, 2019, the disclosure of which is incorporated herein by reference in its entirety.

The present application relates to a curable composition.

### Background Art

An OCA (optically clear adhesive) or OCR (optically clear rein) is a material applied to a display, and is often used in, for example, a display for mobile devices or vehicles.

The OCA or OCR, and the like applied to vehicles have very different required physical properties as compared with the OCA or OCR applied to mobile devices.

Vehicle products have a very long replacement cycle as compared to mobile products. Therefore, it is required that the OCA or OCR applied to vehicle products be stably maintained for a much longer period of time as compared to the OCA or OCR applied to mobile products.

In addition, vehicle products are often exposed to much higher temperatures than mobile products, are often exposed to ultraviolet light and the like, and external light, and are frequently exposed to conditions where high and low temperatures are repeated according to seasonal changes.

Therefore, the OCR or OCA applied to vehicle products needs to secure longer-term reliability even under much harsher conditions as compared to general cases.

### Disclosure

### Technical Problem

The present application provides a curable composition. In the present application, a polymer having a long polymer chain is chemically crosslinked with a curing agent, and simultaneously a side chain having a long chain and a hydroxyl group at the terminal is introduced to the polymer to induce physical entanglement by hydrogen bonding together with the chemical crosslinking, whereby it is possible to provide a curable composition capable of inhibiting or preventing cutting of the main chain and ensuring reliability.

Accordingly, it is an object of the present application to provide a curable composition that has excellent reliability including excellent light resistance, where such excellent reliability can be stably maintained for a long period of time even under severe conditions, and a use thereof.

### Technical Solution

In the case where the measured temperature affects the result among physical properties mentioned in this specification, the relevant physical properties are physical properties measured at room temperature, unless otherwise specified. The term room temperature is a natural temperature without warming or cooling, which is usually a temperature within the range of about 10°C to 30°C, or a temperature of about 23°C or about 25°C or so. In addition, unless specifically stated otherwise in this specification, the unit of temperature is °C.

In the case where the measured pressure affects the result among physical properties mentioned in this specification, the relevant physical properties are physical properties measured at normal pressure, unless otherwise specified. The term normal pressure is a natural pressure without being pressurized or depressurized, where usually about 1 atmosphere or so is referred to as normal pressure.

The present application relates to a curable composition. In one example, the curable composition may be a pressure-sensitive adhesive composition. The term pressure-sensitive adhesive composition means a composition capable of forming a pressure-sensitive adhesive before or after curing. In one example, the pressure-sensitive adhesive composition of the present application may be used as an OCA (optically clear adhesive) or OCR (optically clear resin). The curable composition according to the present application may exhibit stable reliability for a long time under conditions exposed to excessive light and/or conditions exposed to high temperatures.

For example, the curable composition of the present application can effectively maintain desired physical properties without deterioration of light resistance even under conditions of prolonged exposure to light at a high temperature of 50°C or higher. For example, the severe condition may be an environment inside a vehicle, but is not limited thereto.

The curable composition of the present application may be a solventless curable composition. The term solventless curable composition is a composition which does not contain a solvent (aqueous solvent and organic solvent) substantially. Therefore, the content of the aqueous and organic solvents in the curable composition may be 1 weight% or less, 0.5 weight% or less, 0.1 weight% or less, or substantially 0 weight%.

The curable composition may comprise at least a polymer component and a curing agent.

The polymer component included in the curable composition may be a syrup component. The syrup component may comprise an oligomer or polymer component formed by polymerization of two or more monomers, and a monomer component. In one example, such a syrup component may be formed by so-called partial polymerization. That is, when a monomer composition according to a desired composition is partially polymerized, some monomers are polymerized to form the oligomer or polymer and the remaining monomers remain, whereby the syrup component may be formed. Therefore, in this specification, the term monomer unit described below may mean a monomer that exists in a state in which the oligomer or polymer is formed in the polymer component, or a monomer that is not polymerized and is included in the syrup component.

In one example, the polymer component may comprise, as monomer units, an alkyl (meth)acrylate unit having a straight or branched alkyl group and a unit of a compound of Formula 1 below, and may have a weight average molecular weight of 2,200,000 or more.

The matter that the polymer component exhibits such a high molecular weight means that the polymer component includes a very long polymer chain.

In general, when a pressure-sensitive adhesive composition comprising an acrylate polymer, or a cured product thereof is exposed to light, decomposition may occur due to the low bonding energy of the -C=C- bond or the -C-C- bond of the acrylate polymer, and the cleavage of the main chain may occur by radicals of such decomposition chains. Such a chain cleavage part may become a weak point and cause the generation of air bubbles, which leads to a decrease in reliability.

However, in the present application, the occurrence of the weak points can be effectively alleviated, prevented and/or suppressed through chemical cross-linking and physical cross-linking of the polymer component including the long polymer chain as described above.

The alkyl group of the alkyl (meth)acrylate in the alkyl (meth)acrylate unit having a straight or branched alkyl group included in the polymer component may be an alkyl group having 4 to 20 carbon atoms. In another example, the number of carbon atoms of the alkyl group may be 16 or less, 12 or less, or 8 or less, which may be in a substituted or unsubstituted state.

As the alkyl (meth)acrylate, for example, any one or two or more selected from the group consisting of n-butyl (meth)acrylate, t-butyl (meth)acrylate, sec-butyl (meth)acrylate, pentyl (meth)acrylate, 2-ethylbutyl (meth)acrylate, 2-ethylhexyl (meth)acrylate, n-octyl (meth)acrylate, isooctyl (meth)acrylate, lauryl (meth)acrylate and tetradecyl (meth)acrylate may be applied, without being limited thereto.

Such alkyl (meth)acrylate may be included in the polymer component in a ratio of about 20 to 70 weight%. In another example, the ratio is 22 weight% or more, 24 weight% or more, 26 weight% or more, 28 weight% or more, 30 weight% or more, 32 weight% or more, 34 weight% or more, 36 weight% or more, 38 weight% or more, 40 weight% or more, or 42 weight% or more, or may also be 68 weight% or less, 66 weight% or less, 64 weight% or less, 62 weight% or less, 60 weight% or less, 58 weight% or less, 56 weight% or less, 54 weight% or less, 52 weight% or less, 50 weight% or less, 48 weight% or less, 46 weight% or less, or 44 weight% or less or so.

The polymer component may also comprise, as a monomer unit, a unit of the following formula 1.

[Formula 1]

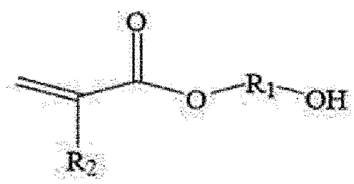

In Formula 1, $R_1$ is an alkylene group having 3 or more carbon atoms, and R2 is hydrogen or an alkyl group having 1 to 4 carbon atoms.

In another example, $R_1$ in Formula 1 may be an alkylene group having 4 or more carbon atoms, or 8 or less carbon atoms, 7 or less carbon atoms, 6 or less carbon atoms, 5 or less carbon atoms, or 4 or less carbon atoms. The alkylene group may be a straight or branched alkylene group, which may be substituted or unsubstituted.

In another example, R2 in Formula 1 may be hydrogen or a methyl group.

The compound of Formula 1 may be 3-hydroxypropyl (meth)acrylate, 4-hydroxybutyl (meth)acrylate, 5-hydroxypentyl (meth)acrylate and/or 6-hydroxyhexyl (meth)acrylate, and the like, but is not limited thereto.

In the polymer component, the unit of the compound of Formula 1 may be included in a ratio of 5 to 60 parts by weight relative to 100 parts by weight of an alkyl (meth)acrylate unit having a straight or branched alkyl group. In another example, the ratio may be 7 parts by weight or more, 9 parts by weight or more, 11 parts by weight or more, 13 parts by weight or more, 15 parts by weight or more, 17 parts by weight or more, 19 parts by weight or more, 21 parts by weight or more, 23 parts by weight or more, 25 parts by weight or more, 27 parts by weight or more, 29 parts by weight or more, 31 parts by weight or more, 33 parts by weight or more, 35 parts by weight or more, 37 parts by weight or more, 39 parts by weight or more, or 41 parts by weight or more, or may be 58 parts by weight or less, 56 parts by weight or less, 54 parts by weight or less, 52 parts by weight or less, 50 parts by weight or less, 48 parts by weight or less, 46 parts by weight or less, 44 parts by weight or less, 42 parts by weight or less, 40 parts by weight or less, 38 parts by weight or less, 36 parts by weight or less, 34 parts by weight or less, 32 parts by weight or less, 30 parts by weight or less, 28 parts by weight or less, 26 parts by weight or less, 24 parts by weight or less, 22 parts by weight or less, 20 parts by weight or less, 18 parts by weight or less, 16 parts by weight or less, 14 parts by weight or less, or 12 parts by weight or less or so.

The compound of Formula 1 may also provide the long-chain polymer component with a hydroxy-containing side chain with a long chain, thereby inducing appropriate physical entanglement of the long-chain polymer component by hydrogen bonding or the like, where the form of this physical entanglement may be further maximized when it is applied in an appropriate ratio together with a compound of Formula 2 to be described below. This physical entanglement can improve the structural stability of the polymer together with chemical crosslinking. Therefore, it is possible to effectively prevent the decrease in reliability due to the above-described main chain cleavage according to light exposure. In addition, the increase in hydrogen bonding by the compound of Formula 1 may also reduce the main chain cleavage effect capable of being caused by the hydroxy group at the chain terminal.

In addition, when the compound of Formula 1 is combined with the compound of Formula 2 to be described below, the hydrogen bonding strength may be increased, and the desired physical properties may be more effectively secured.

Accordingly, the polymer component may further comprise, as a monomer unit, a unit of the compound of the following formula 2.

[Formula 2]

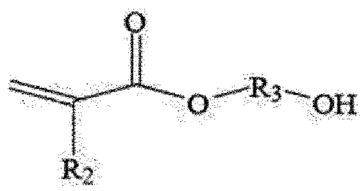

In Formula 2, $R_3$ is a methylene group or an ethylene group, and R2 is independently hydrogen or an alkyl group having 1 to 4 carbon atoms.

In Formula 2, the ethylene group, which may be R3, may be straight or branched, and the methylene group or the ethylene group may be optionally substituted with one or more substituents, or may be unsubstituted.

In another example, R2 in Formula 2 may be hydrogen or a methyl group.

The compound unit of Formula 2 may be included in the polymer component in an amount of 0.5 to 50 parts by weight relative to 100 parts by weight of an alkyl (meth)acrylate unit having a straight or branched alkyl group.

The compound of Formula 2 may be exemplified by hydroxymethyl (meth)acrylate or 2-hydroxyethyl (meth)acrylate, and the like.

In another example, the ratio may be 1 part by weight or more, 3 parts by weight or more, 5 parts by weight or more, 7 parts by weight or more, 9 parts by weight or more, 11 parts by weight or more, 13 parts by weight or more, 15 parts by weight or more, 17 parts by weight or more, 19 parts by weight or more, 21 parts by weight or more, 23 parts by weight or more, 25 parts by weight or more, 27 parts by weight or more, 29 parts by weight or more, 31 parts by weight or more, or 33 parts by weight or more, or may also be 48 parts by weight or less, 46 parts by weight or less, 44 parts by weight or less, 42 parts by weight or less, 40 parts by weight or less, 38 parts by weight or less, 36 parts by weight or less, 34 parts by weight or less, 32 parts by weight or less, 30 parts by weight or less, 28 parts by weight or less, 26 parts by weight or less, 24 parts by weight or less, 22 parts by weight or less, 20 parts by weight or less, 18 parts by weight or less, 16 parts by weight or less, 14 parts by weight or less, or 12 parts by weight or less or so.

In addition, the weight ratio (A/B) of the unit (A) of Formula 1 and the unit (B) of Formula 2 in the polymer

component may be in a range of 0.01 to 20. In another example, such a ratio may be 0.05 parts by weight or more, 0.1 parts by weight or more, 0.2 parts by weight or more, 0.3 parts by weight or more, 0.5 parts by weight or more, 1 part by weight or more, 3 parts by weight or more, 5 parts by weight or more, 7 parts by weight or more, 7.5 parts by weight or more, 8 parts by weight or more, or 8.5 parts by weight or more, or may also be 18 parts by weight or less, 16 parts by weight or less, 14 parts by weight or less, 12 parts by weight or less, 10 parts by weight or less, 8 parts by weight or less, 6 parts by weight or less, 4 parts by weight or less, 2 parts by weight or less, 1 part by weight or less, or 0.5 parts by weight or less or so.

Under such a ratio, it is possible to secure the hydrogen bonding strength that can induce entanglement in which the desired physical properties can be secured.

In another example, the polymer component may also comprise 1 part by weight to 25 parts by weight of the compound (A) of Formula 1, 1 part by weight to 15 parts by weight of the compound (B) of Formula 2 and 60 parts by weight to 90 parts by weight of the alkyl (meth)acrylate unit (C), relative to 100 parts by weight of the total of the compound (A) of Formula 1, the compound (B) of Formula 2 and the alkyl (meth)acrylate unit (C).

The polymer component may comprise, as an additional component, a unit of a compound of the following formula 3 as a monomer unit.

[Formula 3]

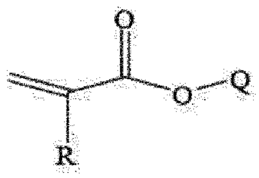

In Formula 3, R is hydrogen or an alkyl group, and Q is a monovalent substituent having a non-aromatic ring structure with 3 to 20 carbon atoms.

In Formula 3, the alkyl group may be exemplified by a straight, branched or cyclic substituted or unsubstituted alkyl group having 1 to 20 carbon atoms, 1 to 16 carbon atoms, 1 to 12 carbon atoms, 1 to 8 carbon atoms, or 1 to 4 carbon atoms.

Meanwhile, Q is a monovalent substituent having a non-aromatic ring structure with 3 to 20 carbon atoms, which may be, for example, a monovalent substituent derived from an aliphatic saturated or unsaturated hydrocarbon cyclic compound. The cyclic compound may have a monocyclic structure, or may also have a polycyclic structure such as a condensed or spiro type. In another example, the number of carbon atoms in the ring structure may be 6 or more, or 8 or more, or may be 18 or less, 16 or less, 14 or less, or 12 or less. Such a substituent may be exemplified by, for example, an isobornyl group, a cyclohexyl group, a norbornanyl group, a norbornenyl group, a dicyclopentadienyl group, an ethynylcyclohexane group, an ethynylcyclohexene group or an ethynyldecahydronaphthalene group, and the like, without being limited thereto.

The unit of the compound of Formula 3 may be included in an amount of 40 to 150 parts by weight relative to 100 parts by weight of an alkyl (meth)acrylate unit having a straight or branched alkyl group. In another example, this ratio may be 45 parts by weight or more, 50 parts by weight or more, 55 parts by weight or more, 60 parts by weight or more, 65 parts by weight or more, 70 parts by weight or more, 75 parts by weight or more, 80 parts by weight or more, or 85 parts by weight or more, or may also be 145 parts by weight or less, 140 parts by weight or less, 135 parts by weight or less, 130 parts by weight or less, 125 parts by weight or less, 120 parts by weight or less, 115 parts by weight or less, 110 parts by weight or less, 105 parts by weight or less, 100 parts by weight or less, 95 parts by weight or less, or 90 parts by weight or less or so.

The polymer component comprising the compound unit of Formula 3 in such a ratio may exhibit excellent required physical properties in a state of chemical crosslinking and physical entanglement.

In addition to the above-described monomer units, the polymer component may also appropriately comprise necessary monomer units depending on the purpose.

A method for preparing the polymer component is not particularly limited. For example, for implementation of the above-described syrup component, the monomers are mixed in a desired ratio, and then the mixture is partially polymerized, whereby the polymer component may be formed.

The method of performing the partial polymerization is not particularly limited, and for example, the polymer component may be prepared by applying an appropriate photoinitiator or thermal initiator thereto and then performing

polymerization (e.g., bulk polymerization) under appropriate conditions in consideration of the desired monomer conversion rate.

The polymer component may have a weight average molecular weight (Mw) of about 2,400,000 or more. In this specification, the term "weight average molecular weight" means a value converted to polystyrene measured by GPC (gel permeation chromatography) measured by the method described in Examples, where the unit is g/mol. In addition, unless otherwise specified in this specification, the molecular weight of any polymer may mean the weight average molecular weight of the polymer.

In another example, the weight average molecular weight may be about 2,300,000 or more, about 2,400,000 or more, about 2,500,000 or more, about 2,600,000 or more, about 2,800,000 or more, about 3,000,000 or more, or about 3,200,000 or more, or may be about 6,000,000 or less, about 5,500,000 or less, 5,000,000 or less, 4,900,000 or less, 4,800,000 or less, about 4,700,000 or less, about 4,500,000 or less, about 4,300,000 or less, about 4,100,000 or less, about 3,900,000 or less, about 3,700,000 or less, about 3,500,000 or less, about 3,300,000 or less, about 3,100,000 or less, about 2,800,000 or less, about 2,600,000 or less, or about 2,500,000 or less or so.

The long-chain polymer component having a level representing the weight average molecular weight may exhibit appropriate physical entanglement and chemical crosslinking structure by the above-described hydrogen bonding with a curing agent to be described below.

The curable composition may comprise a curing agent together with the polymer component. In order to secure a desired crosslinked structure, two or more curing agents may be applied as the curing agent.

For example, as the curing agent, two or more selected from the group consisting of a polyfunctional acrylate having a molar mass of 500 g/mol or less, a polyfunctional isocyanate compound and a polyfunctional urethane acrylate may be applied.

Here, the term polyfunctional acrylate means a compound containing two or more acrylate functional groups such as a (meth)acryloyl group and/or a (meth)acryloyloxy group. At this time, the number of the acrylate functional groups may be present in, for example, a number within a range of 2 to 10, 2 to 9, 2 to 8, 2 to 7, 2 to 6, 2 to 5, 2 to 4 or 2 to 3. For an appropriate crosslinking structure, a bifunctional acrylate may also be applied as the polyfunctional acrylate.

As the acrylate compound, for example, one or two or more selected from the group consisting of a bifunctional type such as 1,4-butanediol di(meth)acrylate, 1,6-hexanediol di(meth)acrylate, neopentyl glycol di(meth)acrylate, hydroxypivalic acid neopentyl glycol di(meth)acrylate, dicyclopentanyl di(meth)acrylate, caprolactone-modified dicyclopentenyl di(meth)acrylate, ethylene oxide-modified phosphoric acid di(meth)acrylate, di(meth)acryl oxyethyl isocyanurate, allylated cyclohexyl di(meth)acrylate, tricyclodecanedimethanol di(meth)acrylate, dimethyloldicyclopentane di(meth)acrylate, ethylene oxide modified hexahydrophthalic acid di(meth)acrylate, neopentyl glycol modified trimethylolpropane di(meth)acrylate, adamantane di(meth)acrylate and 9,9-bis[4-(2-acryloyloxyethoxy)phenyl]fluorene; a trifunctional type such as trimethylolpropane tri(meth)acrylate, dipentaerythritol tri(meth)acrylate, propionic acid modified dipentaerythritol tri(meth)acrylate, pentaerythritol tri(meth)acrylate, propylene oxide modified trimethylolpropane tri(meth)acrylate and tris(meth)acryloxyethyl isocyanurate; a tetrafunctional type such as diglycerin tetra(meth) acrylate and pentaerythritol tetra(meth)acrylate; a pentafunctional type such as propionic acid modified dipentaerythritol penta(meth)acrylate; and a hexafunctional type such as dipentaerythritol hexa(meth)acrylate, caprolactone-modified dipentaerythritol hexa(meth)acrylate, and the like may be used.

In one example, a component having a molecular weight of about 500 g/mol or less may be applied as the polyfunctional acrylate. In another example, the molecular weight may be about 450 g/mol or less, about 400 g/mol or less, about 350 g/mol or less, about 300 g/mol or less, or about 250 g/mol or less, or may also be about 50 g/mol or more, about 55 g/mol or more, about 60 g/mol or more, about 65 g/mol or more, about 70 g/mol or more, about 75 g/mol or more, about 80 g/mol or more, about 85 g/mol or more, about 90 g/mol or more, about 95 g/mol or more, about 100 g/mol or more, about 110 g/mol or more, about 120 g/mol or more, about 130 g/mol or more, about 140 g/mol or more, about 150 g /mol or more, about 160 g/mol or more, about 170 g/mol or more, about 180 g/mol or more, about 190 g/mol or more, or about 200 g/mol or more or so.

In the present application, an aliphatic acyclic polyfunctional acrylate may be applied as the polyfunctional acrylate having the above molecular weight, without being limited thereto.

The polyfunctional isocyanate compound that can be applied as the curing agent is a compound containing two or more isocyanate functional groups, where as an example thereof, a diisocyante such as tolylene diisocyanate, xylene diisocyanate, diphenylmethane diisocyanate, hexamethylene diisocyanate, isophorone diisocyanate, tetramethylxylene diisocyanate or naphthalene diisocyanate, or a reaction product of one or more of the above diisocyanates and a polyol (e.g., trimethylol propane), and the like may be used.

As the urethane acrylate, a reaction product of a polyol, a polyfunctional isocyanate and a hydroxy group-containing (meth)acrylate or a reaction product of a polyfunctional isocyanate and a hydroxy group-containing (meth)acrylate may be applied. Therefore, the urethane acrylate may comprise a polyol unit, a polyfunctional isocyanate unit and a hydroxy group-containing (meth)acrylate unit, or may comprise a polyfunctional isocyanate unit and a hydroxy group-containing (meth)acrylate unit.

Here, a diol may be applied as the polyol, and as the diol, any one or two or more selected from a low molecular weight diol, a diol having a polyene skeleton, a diol having a polyester skeleton, a diol having a polyether skeleton and a diol having a polycarbonate skeleton may be applied. The low molecular weight diol may be exemplified by ethylene glycol, propylene glycol, cyclohexanedimethanol, neopentyl glycol, 3-methyl-1,5-pentanediol and/or 1,6-hexanediol, and the like; the diol having a polyene skeleton may be exemplified by a diol having a polybutadiene skeleton, a diol having a polyisoprene skeleton, a diol having a hydrogenated polybutadiene skeleton and/or a diol having a hydrogenated polyisoprene skeleton, and the like; and the diol having a polyester skeleton may exemplified by an esterification product of a diol component such as the low molecular weight diol or polycaprolactone diol and an acid component such as dicarboxylic acid or an anhydride thereof, and the like.

Here, as the dicarboxylic acid or anhydride thereof, adipic acid, succinic acid, phthalic acid, tetrahydrophthalic acid, hexahydrophthalic acid and/or terephthalic acid and anhydrides thereof, and the like may be exemplified. In addition, the polyether diol may be exemplified by polyethylene glycol and/or polypropylene glycol, and the like, and the polycarbonate diol may be exemplified by a reaction product of the low molecular weight diol or/and a bisphenol such as bisphenol A with a carbonic acid dialkyl ester such as ethylene carbonate and dibutyl carbonate ester, and the like.

As the diol having a polyene skeleton, a diol having a hydrogenated polydiene skeleton may be applied, and an example thereof may include a compound having a diol at the polymer terminal of a monomer such as isoprene, 1,3-butadiene and 1,3-pentadiene, and a compound having a diol at the terminal of the polymer of these monomers.

As the polyfunctional isocyanate, for example, an aliphatic diisocyanate such as hexamethylene diisocyanate, lysine methyl ester diisocyanate, 2,4,4-trimethylhexamethylene diisocyanate and/or dimer acid diisocyanate, an alicyclic diisocyanate such as isophorone diisocyanate, 4,4'-methylenebis(cyclohexyl isocyanate) and/or diisocyanate dimethylcyclohexane, an aromatic diisocyanate such as tolylene diisocyanate, xylene diisocyanate and/or diphenylmethane-4,4'-diisocyanate, and the like may be used. Furthermore, as the polyfunctional isocyanate having three or more isocyanate groups, a hexamethylene diisocyanate trimer and isophorone diisocyanate trimer, and the like may also be applied.

As the hydroxy group-containing (meth)acrylate, a hydroxyalkyl (meth)acrylate such as 2-hydroxyethyl (meth)acrylate, 2-hydroxypropyl (meth)acrylate, 4-hydroxybutyl (meth)acrylate, hydroxypentyl (meth)acrylate and/or hydroxyhexyl (meth)acrylate and hydroxyoctyl (meth)acrylate, and/or a compound having a hydroxy group and two or more (meth)acryloyl groups such as mono or di(meth)acrylate of trimethylolpropane, mono, di or tri(meth)acrylate of pentaerythritol, mono, di or tri(meth)acrylate of ditrimethylolpropane and/or mono, di, tri, tetra or penta(meth)acrylate of dipentaerythritol, and the like may be applied.

A method for preparing a desired urethane acrylate by applying the above components is known. For example, the urethane acrylate may be prepared by a method of reacting a polyol and a polyfunctional isocyanate according to a known method to prepare an isocyanate group-containing compound and reacting the same with a hydroxy group-containing (meth)acrylate, or a method of reacting a polyol, a polyfunctional isocyanate and a hydroxy group-containing (meth)acrylate simultaneously or reacting a polyfunctional isocyanate and a hydroxy group-containing (meth)acrylate.

In one example, one having a number average molecular weight (Mn) in a range of 2,000 to 50,000 g/mol may be used as the urethane acrylate, and a bifunctional urethane acrylate, that is, one comprising two functional groups selected from a (meth)acryloyl group and a (meth)acryloyloxy group may be used. The number average molecular weight is a converted value of standard polystyrene measured by a GPC (gel permeation chromatograph) method.

In one example, as the urethane acrylate, a bifunctional aliphatic polyfunctional urethane acrylate may be used, and for example, a product marketed as SUO 1020 (manufactured by SHIN-A T&C), SUO 1200 (manufactured by SHIN-A T&C), SUO 4120 (manufactured by SHIN-A T&C), SUO M2000 (manufactured by SHIN-A T&C) or SUO 2150 (manufactured by SHIN-A T&C), and the like may be used.

In the present application, two suitable curing agents may be selected from the curing agents as above and used. In one example, in order to properly achieve the desired chemical crosslinking and physical entanglement, an isocyanate compound may not be applied as the curing agent. Therefore, in one example, the compound having an isocyanate group may not exist in the curable composition of the present application. Since it is a compound having an isocyanate group, the case where it is applied to the production of the urethane acrylate and the isocyanate group has already disappeared is excluded.

Such a curing agent may be used in an amount of 0.01 to 10 parts by weight relative to 100 parts by weight of the polymer component. In another example, the ratio may be 0.05 parts by weight or more, 0.1 parts by weight or more, 0.5 parts by weight or more, 1 part by weight or more, 1.5 parts by weight or more, or 2 parts by weight or more or so, or may also be 9 parts by weight or less, 8 parts by weight or less, 7 parts by weight or less, 6 parts by weight or less, 5 parts by weight or less, 4 parts by weight or less, or 3 parts by weight or less or so.

When two or more curing agents are applied, the ratio of each curing agent as applied may be adjusted according to the purpose.

For example, when using a polyfunctional acrylate having a molar mass of 500 g/mol or less and a polyfunctional urethane acrylate as the curing agent, the polyfunctional urethane acrylate is included in a ratio of 0.5 parts by weight to 10 parts by weight relative to 100 parts by weight of the polymer component, where the weight ratio (C/D) of the

polyfunctional urethane acrylate (C) to the polyfunctional acrylate (D) having a molar mass of 500 g/mol or less may be in the range of 20 to 60.

In another example, the polyfunctional urethane acrylate may be included in an amount of 0.5 parts by weight or more, 1 part by weight or more, or 1.5 parts by weight or more, or may also be included in an amount of 10 parts by weight or less, 9 parts by weight or less, 8 parts by weight or less, 7 parts by weight or less, 6 parts by weight or less, 5 parts by weight or less, 4 parts by weight or less, or 3 parts by weight or less or so, relative to 100 parts by weight of the polymer component.

Also, in another example, the weight ratio (C/D) may be 25 or more, 30 or more, or 35 or more, or may also be about 55 or less, 50 or less, or 45 or less or so.

Accordingly, the desired crosslinked structure may be ensured.

The curable composition may further comprise necessary components in addition to the above components. For example, the curable composition may further comprise a radical initiator, such as a photo radical initiator.

As the radical initiator, for example, benzoin, benzoin methyl ether, benzoin ethyl ether, benzoin isopropyl ether, benzoin n-butyl ether, benzoin isobutyl ether, acetophenone, dimethylaminoacetophenone, 2,2-dimethoxy-2-phenylacetophenone, 2,2-diethoxy-2-phenylacetophenone, 2-hydroxy-2-methyl-1-phenylpropan-1-one, 1-hydroxycyclohexylphenyl ketone, 2-methyl-1-[4-(methylthio)phenyl]-2-morpholino-propan-1-one, 4-(2-hydroxyethoxy)phenyl-2-(hydroxy-2-propyl) ketone, benzophenone, p-phenylbenzophenone, 4,4'-diethylaminobenzophenone, dichlorobenzophenone, 2-methylanthraquinone, 2-ethylanthraquinone, 2-t-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyldimethylketal, acetophenone dimethylketal, p-dimethylaminobenzoic acid ester, oligo[2-hydroxy-2-methyl-1-[4-(1-methylvinyl)phenyl]propanone] or 2,4,6-trimethylbenzoyl-diphenyl-phosphineoxide, and the like may be used, without being limited thereto.

For example, the radical initiator may be included in an appropriate ratio in the curable composition, which may be included, for example, in a ratio of approximately 0.1 to 3 parts by weight relative to 100 parts by weight of the polymer component.

The curable composition may further comprise a silane coupling agent. The silane coupling agent may improve adhesiveness and adhesion stability of the pressure-sensitive adhesive, thereby improving heat resistance and moisture resistance, and may also act to improve adhesion reliability even when left for a long time under severe conditions. As the silane coupling agent, for example, gamma-glycidoxypropyl triethoxy silane, gamma-glycidoxypropyl trimethoxy silane, gamma-glycidoxypropyl methyldiethoxy silane, gamma-glycidoxypropyl triethoxy silane, 3-mercaptopropyl trimethoxy silane, vinyltrimethoxysilane, vinyltriethoxysilane, gamma-methacryloxypropyl trimethoxysilane, gamma-methacryloxypropyl triethoxysilane, gamma-aminopropyl trimethoxysilane, gamma-aminopropyl triethoxysilane, 3-isocyanatopropyl triethoxysilane, gamma-acetoacetatepropyl trimethoxysilane, gamma-acetoacetatepropyl triethoxysilane, beta-cyanoacetyl trimethoxysilane, beta-cyanoacetyl triethoxysilane, acetoxyaceto trimethoxysilane, and the like may be used, and one, or a mixture of two or more of the foregoing may be used. It is preferable to use a silane-based coupling agent having an acetoacetate group or a beta-cyanoacetyl group, without being limited thereto.

The silane coupling agent may be included in the curable composition in an appropriate ratio, which may be included, for example, in a ratio of about 0.01 parts by weight to about 5 parts by weight or so relative to 100 parts by weight of the polymer component.

The curable composition may further comprise an antioxidant if desired. As the antioxidant, for example, a hindered phenol-based compound, a sulfur-based antioxidant, a phenyl acetic acid-based antioxidant or a phosphorus-based antioxidant, and the like may be applied, without being limited thereto.

Such an antioxidant may be included in an amount of about 0.01 parts by weight to about 5 parts by weight or about 0.01 parts by weight to about 1 part by weight relative to 100 parts by weight of the polymer component in the curable composition.

The curable composition may also comprise an antistatic agent. As the antistatic agent, an ionic compound is usually applied. As the ionic compound, for example, a metal salt or an organic salt may be used.

Such an antistatic agent may be included in an amount of about 0.01 to 10 parts by weight relative to 100 parts by weight of the polymer component in the curable composition, where an appropriate ratio may be applied in consideration of desired conductivity or the like.

As one example, the pressure-sensitive adhesive composition according to the present application may comprise a photoinitiator. As long as the photoinitiator is capable of initiating the polymerization reaction of the pressure-sensitive adhesive composition through light irradiation or the like, any one may be used. For example, it may include alphahydroxyketone-based compounds (e.g., IRGACURE 184, IRGACURE 500, IRGACURE 2959, DAROCUR 1173; manufactured by Ciba Specialty Chemicals); phenylglyoxylatebased compounds (e.g., IRGACURE 754, DAROCUR MBF; manufactured by Ciba Specialty Chemicals); benzyl dimethyl ketal-based compounds (e.g., IRGACURE 651; manufactured by Ciba Specialty Chemicals); a-aminoketone-based compounds (e.g., IRGACURE 369, IRGACURE 907, IRGACURE 1300; manufactured by Ciba Specialty Chemicals); monoacylphosphine-based compounds (MAPO) (e.g., DAROCUR TPO; manufactured by Ciba Specialty Chemicals); bisacylphosphene-based compounds (BAPO) (e.g.,

IRGACURE 819, IRGACURE 819DW; manufactured by Ciba Specialty Chemicals); phosphine oxide-based compounds (e.g., IRGACURE 2100; manufactured by Ciba Specialty Chemicals); metallocene-based compounds (e.g., IRGACURE 784; manufactured by Ciba Specialty Chemicals); iodonium salts (e.g., IRGACURE 250; manufactured by Ciba Specialty Chemicals); and mixtures of one or more of the foregoing (e.g., DAROCUR 4265, IRGACURE 2022, IRGACURE 1300, IRGACURE 2005, IRGACURE 2010, IRGACURE 2020; manufactured by Ciba Specialty Chemicals), and one or two or more of the foregoing may be used, without being limited thereto.

In an embodiment of the present application, the pressure-sensitive adhesive composition may comprise, as the photoinitiator, a photoinitiator having an absorption wavelength band of 400nm or more. The present application can implement excellent curing properties by adjusting the absorption wavelength band of the photoinitiator.

The photoinitiator may be included in an amount of 5 parts by weight or less relative to 100 parts by weight of the polymer component. As another example, the amount may be about 4 parts by weight or less, 3 parts by weight or less, 2 parts by weight or less, or about 1 part by weight or less, and it may be included in about 0.01 parts by weight or more, about 0.05 parts by weight or more, or about 0.1 parts by weight or more. When the photoinitiator is included in the pressure-sensitive adhesive composition within the above range, curing efficiency of the pressure-sensitive adhesive composition may be increased.

The present application also relates to a cured product of the curable composition, and the cured product may be a pressure-sensitive adhesive. The pressure-sensitive adhesive may be formed by curing the curable composition.

As one example, the pressure-sensitive adhesive may have a gel fraction of 80% or more according to the following equation 1.

<Equation 1>

$$\text{Gel fraction} = 100 \times B/A$$

In Equation 1, A is the weight (unit: g) of the pressure-sensitive adhesive, and B is the weight (unit: g) of the insoluble content of the pressure-sensitive adhesive with the weight A to ethyl acetate.

The gel fraction can be evaluated in the manner described in the Examples herein.

In another example, the gel fraction may be about 82% or more, 84% or more, about 86% or more, about 88% or more, or about 90% or more, or may also be about 99% or less, about 97% or less, about 95% or less, or about 93% or less or so. The gel fraction depends on the molecular weight or crosslinking degree, and the like of the polymer component included in the curable composition, and an appropriate range can be achieved in consideration of this.

As one example, the cured product of the pressure-sensitive adhesive composition included in the pressure-sensitive adhesive film may have a total mass loss (TML) of 2.0% or less according to the following equation 2.

[Equation 2]

$$\text{TML}(\%) = ((\text{Mf-M})/(\text{Mi-M})) \times 100$$

In Equation 2, M is the weight (g) of the wire mesh cut to the size of 7cm×7cm, Mi is the weight (g) measured after cutting the pressure-sensitive adhesive to the size of 5cm×5cm and attaching it to the cut wire mesh, Mf is the weight (g) measured after the wire mesh with the pressure-sensitive adhesive attached is left in an oven at 150°C for 1 hour.

As another example, the total mass loss (TML) may be about 1.8% or less, about 1.6% or less, about 1.4%, about 1.2%, or about 1.0% or less, and the lower limit is not particularly limited, which may be about 0.0% or more, 0.01% or more, 0.05% or more, or about 0.1% or more. When the TML (%) of the pressure-sensitive adhesive satisfies the above range, it may be advantageous to improve adhesion reliability even when left in severe light exposure conditions for a long period of time.

As one example, the pressure-sensitive adhesive may have a peel force of 2,500 gf/inch or more with respect to a glass base material as measured at a peel angle of 180 degrees and a peel rate of 300 m/min. As another example, the peel force may be about 2,600gf/inch or more, 2,700gf/inch or more, 2,800gf/inch or more, 2,900gf/inch or more, or about 3,000gf/inch or more, and may be 3,900 gf/inch or less, about 3,800 gf/inch or less, or about 3,700 gf/inch or less.

For the peel force measurement, a specimen obtained by laminating a pressure-sensitive adhesive on a PET (poly(ethylene terephthalate)) film and cutting it to have a length of about 14cm and a width of about 2.5cm may be used. The specimen is laminated on a glass base material and attached to the glass, and after a build-up time for 1 hour, it can be measured at a peel angle of 180° and a peel rate of 300 m/min. Meanwhile, the peel force may be an average value for three specimens.

When the peel force of the pressure-sensitive adhesive satisfies the above range, it may be advantageous to

improve adhesion reliability even when left in severe light exposure conditions for a long period of time.

As one example, the pressure-sensitive adhesive may have a storage modulus at room temperature in a range of 0.05 to 2 MPa. The storage modulus is measured in the manner described in the Examples herein, and in another example, it may be 0.07 MPa or more, 0.09 MPa or more, or 0.11 MPa or more, or may be 1.8 MPa or less, 1.6 MPa or less, 1.4 MPa or less, 1.2 MPa or less, 1.0 MPa or less, 0.8 MPa or less, 0.6 MPa or less, 0.4 MPa or less, 0.2 MPa or less, 0.15 MPa or less, about 0.14 MPa or less, or about 0.13 MPa or less.

The storage modulus may be measured using a rheological property measuring device (Advanced Rheometric Expansion System, TA). Specifically, the storage modulus at 25 °C can be obtained by measuring it at a temperature increase rate of 5°C in a temperature range of -20°C to 100°C at a strain of 10% and a frequency of 1 Hz.

When the storage elastic modulus of the cured product of the pressure-sensitive adhesive composition satisfies the above range, it may be advantageous to improve adhesion reliability even when left in severe light exposure conditions for a long time.

The present application also relates to a display device comprising the curable composition or a cured product (pressure-sensitive adhesive) thereof. In one example, the display device may be a display device for vehicles. The curable composition or its cured product (pressure-sensitive adhesive) may be used as an OCA or OCR in the display device. Other constitutions of the display device or the application method of the OCA or OCR are not particularly limited, which may be applied in a known manner.

Advantageous Effects

The curable composition according to the present application may secure excellent light resistance even in severe light exposure environments. Also, in the curable composition or pressure-sensitive adhesive according to the present application, the gel fraction, total mass loss, peel force and storage modulus can be improved, and the excellent reliability to light can be secured.

In the present application, a polymer having a long polymer chain is chemically crosslinked with a curing agent, and simultaneously a side chain having a long chain and a hydroxyl group at the terminal is introduced to the polymer to induce physical entanglement by hydrogen bonding together with the chemical crosslinking, whereby it is possible to provide a curable composition capable of inhibiting or preventing cutting of the main chain and ensuring reliability.

Accordingly, the present application can provide a curable composition that has excellent reliability including excellent light resistance, where such excellent reliability can be stably maintained for a long period of time even under severe conditions, and a use thereof.

## Mode for Invention

Hereinafter, the present application will be described in detail through examples, but the scope of the present application is not limited by the following examples.

### 1. Molecular weight evaluation

The weight average molecular weight (Mw) was measured using GPC (gel permeation chromatograph) under the following conditions, and the measurement results were converted using the standard polystyrene of Agilent system for manufacturing a calibration curve.

<Measurement conditions>

Meter: Agilent 1260 Infinity II

Column: 1 Guard Column + 1 Column Mixed-A (20μm) + 1 Column Mixed-B (10μm)

(1) Mixed A column Part N0: PL1110-6200 PL gel 20μm MIXED-A 300x7.5mm

(2) Mixed B column Part N0: PL1110-6100 PL gel 10μm MIXED-B 300x7.5mm

Column temperature: 35°C

Eluent: THF (tetrahydrofuran)

Flow rate: 1.0 mL/min

Concentration: ~ 1 mg/mL (100 μL injection)

**2. Gel fraction**

The cured product (pressure-sensitive adhesive) of the pressure-sensitive adhesive composition was cut to a size of 5cm×5cm and placed in a polyethylene bottle, thereby measuring the weight (a). Then, ethyl acetate was placed in the polyethylene bottle so that the pressure-sensitive adhesive was sufficiently submerged, and the bottle was left at room temperature for 24 hours.

Subsequently, the pressure-sensitive adhesive and ethyl acetate in the polyethylene bottle were poured into a wire mesh (weight: b) cut to a size of 14cm×14cm and filtered. Then, the weight (c) was measured after drying the wire mesh, through which the pressure-sensitive adhesive was filtered, in an oven at 110°C for 2 hours.

Subsequently, the gel fraction (unit: %) was measured by substituting each of the measured weights a, b and c into the following equation 1.

<Equation 1>

$$\text{Gel fraction} = ((c-b)/a) \times 100$$

**3. Total** mass **loss (TML)**

The wire mesh was cut to 7cm×7cm, and the weight (M) of the cut wire mesh was measured. The cured product (pressure-sensitive adhesive) of the pressure-sensitive adhesive composition was cut to a size of 5cm×5cm and attached to the wire mesh, and then the weight (Mi) of the wire mesh to which the pressure-sensitive adhesive was attached was measured. Thereafter, the wire mesh, to which the pressure-sensitive adhesive was attached, was left in an oven at 150°C for 1 hour, and the weight (Mf) was measured. The total mass loss (unit: %) was measured by substituting the measurement results into the following equation 2.

<Equation 2>

$$\text{TML}(\%) = ((Mf-M)/(Mi-M)) \times 100$$

**4. Peel force**

A specimen having a length of 14cm and a width of 2.5cm was prepared by laminating the cured product (pressure-sensitive adhesive) of the pressure-sensitive adhesive composition with a 50 μm-thick PET (poly(ethylene terephthalate)) film (SG00, SKC). Here, the length of the PET film was 14cm, and the pressure-sensitive adhesive was attached thereon in a length of 6 cm.

The pressure-sensitive adhesive of the prepared specimen was laminated on a glass base material having a thickness of 1.1 mm by reciprocating a 2 kg roller 5 times. Subsequently, after a build-up time for 1 hour, the peel force of the pressure-sensitive adhesive to the glass base material was measured at a peel angle of 180 degrees and a peel rate of 300 mm/min. The peel force was taken as an average value for three specimens.

**5. Storage modulus**

The storage modulus of the cured product (pressure-sensitive adhesive) of the pressure-sensitive adhesive composition was measured using a rheological property measuring device (Advanced Rheometric Expansion System (ARES) G2, TA).

A specimen having a thickness of 600 μm or so was prepared by roll-laminating 3 to 6 sheets of the pressure-sensitive adhesive having a thickness of about 100 to 200 μm or so. Subsequently, the storage modulus at 25°C was obtained by measuring it at a temperature increase rate of 5°C/min in a temperature range of -20°C to 100°C under conditions of a strain of 10% and a frequency of 1Hz, using a parallel plate of the measuring device.

## 6. Reliability

A laminate is prepared, in which a cured product (pressure-sensitive adhesive) of the pressure-sensitive adhesive composition is placed between glass plates disposed opposite to each other to be laminated in the order of glass/pressure-sensitive adhesive/glass. The prepared laminate was treated at a temperature of 50°C and a pressure of 5bar for 20 minutes, and then introduced into Q-sun chamber (Q-Lab, Xe-3) (1,600W/$m^2$, Black Standard Temp. 70°C, Chamber Temp. 50°C) to check whether or not bubbles occurred by time.

<Evaluation criteria>

◎: When bubbles do not occur for 300 hours or more to 500 hours

O When bubbles occur for 100 hours or more to less than 300 hours

∆: When bubbles occur for 24 hours or more to less than 100 hours

×: When bubbles occur before 24 hours have elapsed

## Example 1

### Preparation of polymer component

2-ethylhexyl acrylate (2-EHA), isobornyl acrylate (IBoA), 2-hydroxyethyl acrylate (2-HEA) and 4-hydroxybutyl acrylate (4-HBA) were introduced into a 2L reactor in which nitrogen gas was refluxed and a cooling device was installed to facilitate temperature control in a ratio of 43:37:10:10 parts by weight (2-EHA: IBoA: 2-HEA: 4-HBA) to form a monomer mixture. Subsequently, nitrogen gas was purged for 10 minutes for removing oxygen, and a radical initiator (1-184) diluted to a concentration of about 50 weight% in ethyl acetate as a reaction initiator was introduced thereto in an amount of about 0.001 parts by weight relative to 100 parts by weight of the monomer mixture in a state where the temperature was raised to about 40°C and irradiated with light (metal halide lamp) having a wavelength of about 270~420nm (Peak 365 nm) or so and a light quantity of about 60mW/$cm^2$ or so for about 30 seconds to prepare a polymer component having a weight average molecular weight (Mw) of about 3,310,000 in a syrup state.

### Preparation of pressure-sensitive adhesive composition

With respect to 100 parts by weight of the prepared polymer component, 0.05 parts by weight of 1,6-hexanediol diacrylate (HDDA) as a curing agent and 2.0 parts by weight of a curing agent (SUO-1020 from SHIN-A T&C) were added, and 0.3 parts by weight of a photoinitiator (Igacure 651, Ciba Specialty Chemicals) and 0.2 parts by weight of an epoxy silane coupling agent (KBM403, Shin-Etsu) were added and then the mixture was uniformly mixed to prepare a pressure-sensitive adhesive composition.

### Preparation of pressure-sensitive adhesive film

The pressure-sensitive adhesive composition as prepared above was applied to have a thickness of 200μm on the PET film subjected to the release treatment, and irradiated with ultraviolet rays (black light lamp) with a wavelength of about 340 nm or so at a light intensity of about 2 to 3mW/$cm^2$ or so for about 180 seconds (average light quantity 756mJ/$cm^2$) to obtain a cured product (pressure-sensitive adhesive).

## Example 2

A polymer component was prepared in the same method as in Example 1, except that 2-ethylhexyl acrylate (2-EHA), isobornyl acrylate (IBoA), 2-hydroxyethyl acrylate (2-HEA) and 4-hydroxybutyl acrylate (4-HBA) were introduced in a ratio of 43:37:2:18 parts by weight (2-EHA: IBoA: 2-HEA: 4-HBA). The acrylate polymer included in the prepared polymer component had a weight average molecular weight (Mw) of about 2,400,000.

In addition, a pressure-sensitive adhesive composition and a pressure-sensitive adhesive film were prepared in the same method as in Example 1.

## Example 3

A polymer component was prepared in the same method as in Example 1, except that 2-ethylhexyl acrylate (2-EHA), isobornyl acrylate (IBoA), 2-hydroxyethyl acrylate (2-HEA) and 4-hydroxybutyl acrylate (4-HBA) were introduced in a ratio of 43:37:15:5 parts by weight (2-EHA: IBoA: 2-HEA: 4-HBA). The acrylate polymer included in the prepared polymer component had a weight average molecular weight (Mw) of about 3,000,000.

In addition, a pressure-sensitive adhesive composition and a pressure-sensitive adhesive film were prepared in the same method as in Example 1.

## Comparative Example 1

### Preparation of polymer component

2-ethylhexyl acrylate (2-EHA), isobornyl acrylate (IBoA) and 2-hydroxyethyl acrylate (2-HEA) were introduced into a 2L reactor in which nitrogen gas was refluxed and a cooling device was installed to facilitate temperature control in a ratio of 43:37:20 parts by weight (2-EHA: IBoA: 2-HEA). Subsequently, nitrogen gas was purged for 10 minutes for removing oxygen, and then 1-184 diluted to a concentration of about 50 weight% in ethyl acetate as a reaction initiator was introduced thereto in an amount of about 0.001 parts by weight in a state where the temperature was raised to about 40 degrees and reacted for 30 seconds to prepare a polymer component comprising an acrylate polymer having a weight average molecular weight (Mw) of about 4,050,000.

### Preparation of pressure-sensitive adhesive composition and pressure-sensitive adhesive film

A pressure-sensitive adhesive composition and a pressure-sensitive adhesive film were prepared in the same method as in Example 1 using the above-prepared polymer component.

## Comparative Example 2

### Preparation of polymer component

2-ethylhexyl acrylate (2-EHA), isobornyl acrylate (IBoA) and 2-hydroxyethyl acrylate (2-HEA) were introduced into a 2L reactor in which nitrogen gas was refluxed and a cooling device was installed to facilitate temperature control in a ratio of 55:30:15 parts by weight (2-EHA: IBoA: 2-HEA). Subsequently, nitrogen gas was purged for 10 minutes for removing oxygen, and then 1-184 diluted to a concentration of about 50 weight% in ethyl acetate as a reaction initiator was introduced thereto in an amount of about 0.001 parts by weight in a state where the temperature was raised to about 40 degrees and reacted for 30 seconds to prepare a polymer component comprising an acrylate polymer having a weight average molecular weight (Mw) of about 3,000,000.

### Preparation of pressure-sensitive adhesive composition

With respect to 100 parts by weight of the prepared polymer component, 0.05 parts by weight of 1,6-hexanediol diacrylate (HDDA) as a curing agent and 0.2 parts by weight of a curing agent (SUO-1020 from SHIN-A T&C) were added, and 0.3 parts by weight of a photoinitiator (Igacure 651, Ciba Specialty Chemicals) and 0.2 parts by weight of an epoxy silane coupling agent (KBM403, Shin-Etsu) were added and then the mixture was uniformly mixed to prepare a pressure-sensitive adhesive composition.

### Preparation of pressure-sensitive adhesive film

A pressure-sensitive adhesive film was prepared in the same method as in Example 1 using the above-prepared adhesive composition.

## Comparative Example 3

### Preparation of polymer component

2-ethylhexyl acrylate (2-EHA), isobornyl acrylate (IBoA) and 2-hydroxyethyl acrylate (2-HEA) were introduced into a 2L reactor in which nitrogen gas was refluxed and a cooling device was installed to facilitate temperature control in a ratio of 43:37:20 parts by weight (2-EHA: IBoA: 2-HEA). Subsequently, nitrogen gas was purged for 10 minutes for

removing oxygen, and then 1-184 diluted to a concentration of about 50 weight% in ethyl acetate as a reaction initiator was introduced thereto in an amount of about 0.001 parts by weight in a state where the temperature was raised to about 40 degrees and reacted for 30 seconds to prepare a polymer component comprising an acrylate polymer having a weight average molecular weight (Mw) of about 2,600,000.

**Preparation of pressure-sensitive adhesive composition and pressure-sensitive adhesive film**

A pressure-sensitive adhesive composition and a pressure-sensitive adhesive film were prepared in the same method as in Example 1 using the above-prepared polymer component.

**Comparative Example 4**

**Preparation of polymer component**

2-ethylhexyl acrylate (2-EHA), isobornyl acrylate (IBoA) and 2-hydroxyethyl acrylate (HBA) were introduced into a 2L reactor in which nitrogen gas was refluxed and a cooling device was installed to facilitate temperature control in a ratio of 43:37:20 parts by weight (2-EHA: IBoA: 2-HBA). Subsequently, nitrogen gas was purged for 10 minutes for removing oxygen, and then 1-184 diluted to a concentration of about 50 weight% in ethyl acetate as a reaction initiator was introduced thereto in an amount of about 0.001 parts by weight in a state where the temperature was raised to about 40 degrees and reacted for 30 seconds to prepare a polymer component comprising an acrylate polymer having a weight average molecular weight (Mw) of about 1,580,000.

**Preparation of pressure-sensitive adhesive composition and pressure-sensitive adhesive film**

A pressure-sensitive adhesive composition and a pressure-sensitive adhesive film were prepared in the same method as in Example 1 using the above-prepared polymer component.

**Comparative Example 5**

**Preparation of polymer component**

2-ethylhexyl acrylate (2-EHA), isobornyl acrylate (IBoA), 2-hydroxyethyl acrylate (2-HEA) and 4-hydroxybutyl acrylate (4-HBA) were introduced into a 2L reactor in which nitrogen gas was refluxed and a cooling device was installed to facilitate temperature control in a ratio of 43:37:10:10 parts by weight (2-EHA: IBoA: 2-HEA: 4-HBA). Subsequently, nitrogen gas was purged for 10 minutes for removing oxygen, and then 1-184 diluted to a concentration of about 50 weight% in ethyl acetate as a reaction initiator was introduced thereto in an amount of about 0.001 parts by weight in a state where the temperature was raised to about 40 degrees and reacted for 20 seconds to prepare a polymer component comprising an acrylate polymer having a weight average molecular weight (Mw) of about 1,500,000.

**Preparation of pressure-sensitive adhesive composition**

With respect to 100 parts by weight of the prepared polymer component, 0.05 parts by weight of 1,6-hexanediol diacrylate (HDDA) as a curing agent and 2.0 parts by weight of a curing agent (SUO-1020 from SHIN-A T&C) were added, and 0.3 parts by weight of a photoinitiator (Igacure 651, Ciba Specialty Chemicals) and 0.2 parts by weight of an epoxy silane coupling agent (KBM403, Shin-Etsu) were added and then the mixture was uniformly mixed to prepare a pressure-sensitive adhesive composition.

**Preparation of pressure-sensitive adhesive film**

The pressure-sensitive adhesive composition as prepared above was applied on a PET film subjected to release treatment to have a thickness of 200$\mu$m, and then irradiated with UV of 1J to prepare a pressure-sensitive adhesive film comprising a cured product of the pressure-sensitive adhesive composition.

**Comparative Example 6**

**Preparation of polymer component**

2-ethylhexyl acrylate (2-EHA), isobornyl acrylate (IBoA), 2-hydroxyethyl acrylate (2-HEA) and 4-hydroxybutyl

acrylate (4-HBA) were introduced into a 2L reactor in which nitrogen gas was refluxed and a cooling device was installed to facilitate temperature control in a ratio of 43:37:10:10 parts by weight (2-EHA: IBoA: 2-HEA: 4-HBA). Subsequently, nitrogen gas was purged for 10 minutes for removing oxygen, and then 1-184 diluted to a concentration of about 50 weight% in ethyl acetate as a reaction initiator was introduced thereto in an amount of about 0.001 parts by weight in a state where the temperature was raised to about 40 degrees and reacted for 30 seconds to prepare a polymer component comprising an acrylate polymer having a weight average molecular weight (Mw) of about 3,310,000.

**Preparation of pressure-sensitive adhesive composition**

With respect to 100 parts by weight of the prepared polymer component, 0.03 parts by weight of 1,6-hexanediol diacrylate (HDDA) as a curing agent was added, and 0.3 parts by weight of a photoinitiator (Igacure 651, Ciba Specialty Chemicals) and 0.2 parts by weight of an epoxy silane coupling agent (KBM403, Shin-Etsu) were added and then the mixture was uniformly mixed to prepare a pressure-sensitive adhesive composition.

**Preparation of pressure-sensitive adhesive film**

The pressure-sensitive adhesive composition as prepared above was applied on a PET film subjected to release treatment to have a thickness of 200μm, and then irradiated with UV of 1J to prepare a pressure-sensitive adhesive film comprising a cured product of the pressure-sensitive adhesive composition.

The evaluation results for the Examples and Comparative Examples were summarized and described in Table 1 below.

[Table 1]

| | | GEL (%) | TML (%) | Peel force (gf/inch) | Storage modulus (MPa) | Reliability |
|---|---|---|---|---|---|---|
| Example | 1 | 92.1 | 0.7 | 3,800 | 0.110 | ◎ |
| | 2 | 91.5 | 0.9 | 3.500 | 0.09 | O |
| | 3 | 91.3 | 0.9 | 3,500 | 0.10 | O |
| Comparative Example | 1 | 92.3 | 0.6 | 3,100 | 0.153 | Δ |
| | 2 | 91.0 | 0.7 | 3,000 | 0.075 | × |
| | 3 | 92.4 | 0.6 | 3,100 | 0.145 | Δ |
| | 4 | 89.8 | 0.8 | 1,500 | 0.092 | Δ |
| | 5 | 90.1 | 1.1 | 2,500 | 0.09 | Δ |
| | 6 | 80.1 | 1.2 | 2,400 | 0.07 | Δ |

Through the results of Table 1, in the case of Examples 1 to 3, which are pressure-sensitive adhesive compositions comprising a polymer component including an acrylate polymer comprising a repeating unit derived from the compound (A) of Formula 1 and a repeating unit derived from the compound (B) of Formula 2; and two curing agents, it was confirmed that the compositions had excellent light resistance, and good gel fraction, total mass loss, peel force and storage elasticity.

However, in the case of Comparative Examples 1 to 3, which are pressure-sensitive adhesive compositions comprising a polymer component including an acrylate polymer without any repeating unit derived from the compound (A) of Formula 1; and two curing agents, it could be confirmed that the compositions had poor light resistance. Also, in the case of Comparative Example 4, which is a pressure-sensitive adhesive composition comprising a polymer component including an acrylate polymer without any repeating unit derived from the compound (A) of Formula 2; and two curing agents, it was confirmed that the composition had both of poor light resistance and peel force.

Meanwhile, in the case of Comparative Example 5 that the weight average molecular weight of the acrylate polymer is less than 2,400,000, and in the case of Comparative Example 6 that only one curing agent is included in the pressure-sensitive adhesive composition, it was confirmed that both the compositions had poor light resistance.

## Claims

**1.** A curable composition, comprising:

a polymer component; and
a cureing agent,

wherein the polymer component comprises an alkyl (meth)acrylate unit having a straight or branched alkyl group and a unit of a compound of Formula 1 below and
wherein the polymer component has a weight average molecular weight of 2,200,000 or more:

[Formula 1]

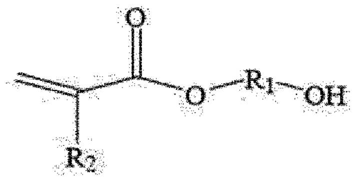

wherein, $R_1$ is an alkylene group having 3 or more carbon atoms, and R2 is hydrogen or an alkyl group having 1 to 4 carbon atoms.

**2.** The curable composition according to claim 1, wherein the polymer component comprises 5 to 60 parts by weight of the unit of the compound of Formula 1 relative to 100 parts by weight of the alkyl (meth)acrylate unit having a straight or branched alkyl group.

**3.** The curable composition according to claim 1, wherein the polymer component further comprises a unit of a compound of Formula 2 below:

[Formula 2]

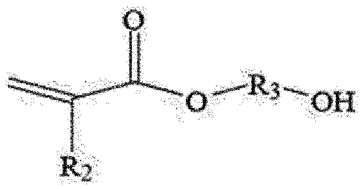

wherein, $R_3$ is a methylene group or an ethylene group, and R2 is independently hydrogen or an alkyl group having 1 to 4 carbon atoms.

**4.** The curable composition according to claim 3, wherein the polymer component comprises the compound unit of Formula 2 in an amount of 0.5 to 50 parts by weight relative to 100 parts by weight of the alkyl (meth)acrylate unit having a straight or branched alkyl group, and wherein a weight ratio (A/B) of the unit (A) of Formula 1 to the unit (B) of Formula 2 is in a range of 0.01 to 20.

**5.** The curable composition according to claim 1, wherein the polymer component further comprises a unit of a compound of Formula 3 below:

[Formula 3]

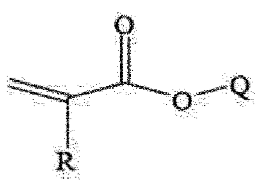

wherein, R is hydrogen or an alkyl group, and Q is a monovalent substituent having a non-aromatic ring structure with 3 to 20 carbon atoms.

6. The curable composition according to claim 5, wherein the polymer component comprises the unit of the compound of Formula 3 in an amount of 40 to 150 parts by weight relative to 100 parts by weight of the alkyl (meth)acrylate unit having a straight or branched alkyl group.

7. The curable composition according to claim 1, wherein the curing agent comprises two or more selected from the group consisting of a polyfunctional acrylate having a molar mass of 500 g/mol or less, a polyfunctional isocyanate compound and a polyfunctional urethane acrylate.

8. The curable composition according to claim 1, wherein the curing agent is included in a range of 0.01 to 10 parts by weight relative to 100 parts by weight of the polymer component.

9. The curable composition according to claim 1, wherein the curing agent comprises a polyfunctional acrylate having a molar mass of 500 g/mol or less and a polyfunctional urethane acrylate.

10. The curable composition according to claim 9, wherein the polyfunctional urethane acrylate is included in a ratio within a range of 0.5 parts by weight to 10 parts by weight relative to 100 parts by weight of the polymer component, and the weight ratio (C/D) of the polyfunctional urethane acrylate (C) to the polyfunctional acrylate having a molar mass of 500 g/mol or less is in a range of 20 to 60.

11. The curable composition according to claim 1, further comprising one or more selected from the group consisting of a silane coupling agent, a radical initiator, an antioxidant, an antistatic agent, an ultraviolet absorber and a tackifier.

12. A pressure-sensitive adhesive,

wherein the pressure-sensitive adhesive is a cured product of a curable composition,
wherein the curable composition comprises a polymer component and a curing agent,
wherein the polymer component comprise an alkyl (meth)acrylate unit having a straight or branched alkyl group and a unit of a compound of Formula 1 below,
wherein the polymer component has a weight average molecular weight of 2,200,000 or more, and
wherein the pressure-sensitive adhesive has a gel fraction of 80% or more:

[Formula 1]

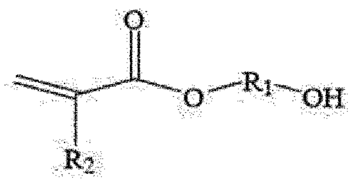

wherein, $R_1$ is an alkylene group having 3 or more carbon atoms, and R2 is hydrogen or an alkyl group having 1 to 4 carbon atoms.

13. The pressure-sensitive adhesive according to claim 12, wherein the pressure-sensitive adhesive has a room temperature storage modulus in a range of 0.05 MPa to 0.2 MPa.

14. A display device comprising the pressure-sensitive adhesive of claim 12.

**INTERNATIONAL SEARCH REPORT**

International application No.
**PCT/KR2020/014152**

**A. CLASSIFICATION OF SUBJECT MATTER**

**C09J 133/04**(2006.01)i; **C09J 7/38**(2018.01)i; **C09J 11/00**(2006.01)i; **C08K 5/10**(2006.01)i

According to International Patent Classification (IPC) or to both national classification and IPC

**B. FIELDS SEARCHED**

Minimum documentation searched (classification system followed by classification symbols)

C09J 133/04(2006.01); C09J 11/02(2006.01); C09J 11/04(2006.01); C09J 11/06(2006.01); C09J 133/06(2006.01); C09J 7/00(2006.01); C09J 7/02(2006.01); C09J 7/20(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 히드록시기(hydroxy group), 점착제(adhesive), 아크릴레이트(acrylate), 디스플레이(display)

**C. DOCUMENTS CONSIDERED TO BE RELEVANT**

| Category* | Citation of document, with indication, where appropriate, of the relevant passages | Relevant to claim No. |
|---|---|---|
| Y | JP 2015-183177 A (TOYO INK SC HOLDINGS CO., LTD.) 22 October 2015 (2015-10-22)<br>See claim 1; paragraphs [0003]-[0004], [0023]-[0032] and [0051]-[0058]; table 1, A9; and example 1. | 1-14 |
| Y | KR 10-2014-0107207 A (NITTO DENKO CORPORATION) 04 September 2014 (2014-09-04)<br>See claims 1, 3 and 7-11; and paragraphs [0043]-[0054]. | 1-14 |
| A | KR 10-2015-0001977 A (LG HAUSYS, LTD.) 07 January 2015 (2015-01-07)<br>See entire document. | 1-14 |
| A | KR 10-2019-0024742 A (SAMSUNG SDI CO., LTD.) 08 March 2019 (2019-03-08)<br>See entire document. | 1-14 |
| A | JP 2018-145368 A (TOYO INK SC HOLDINGS CO., LTD.) 20 September 2018 (2018-09-20)<br>See entire document. | 1-14 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 January 2021** | **22 January 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2020/014152**

| Patent document cited in search report | Publication date (day/month/year) | Patent family member(s) | Publication date (day/month/year) |
|---|---|---|---|
| JP 2015-183177 A | 22 October 2015 | JP 6206721 B2 | 04 October 2017 |
| KR 10-2014-0107207 A | 04 September 2014 | CN 103998553 A | 20 August 2014 |
| | | JP 2013-133440 A | 08 July 2013 |
| | | TW 201331320 A | 01 August 2013 |
| | | US 2015-0010754 A1 | 08 January 2015 |
| | | WO 2013-099493 A1 | 04 July 2013 |
| KR 10-2015-0001977 A | 07 January 2015 | CN 105378012 A | 02 March 2016 |
| | | CN 105378012 B | 03 December 2019 |
| | | EP 3015518 A1 | 04 May 2016 |
| | | EP 3015518 A4 | 29 June 2016 |
| | | EP 3015518 B1 | 23 May 2018 |
| | | JP 2016-525160 A | 22 August 2016 |
| | | JP 6523270 B2 | 29 May 2019 |
| | | KR 10-1816332 B1 | 08 January 2018 |
| | | TW 201500508 A | 01 January 2015 |
| | | TW I629333 B | 11 July 2018 |
| | | US 10227510 B2 | 12 March 2019 |
| | | US 2016-0145473 A1 | 26 May 2016 |
| | | WO 2014-209074 A1 | 31 December 2014 |
| KR 10-2019-0024742 A | 08 March 2019 | CN 111094483 A | 01 May 2020 |
| | | KR 10-2019-0028032 A | 18 March 2019 |
| | | KR 10-2126047 B1 | 23 June 2020 |
| | | TW 201920569 A | 01 June 2019 |
| | | TW I695048 B | 01 June 2020 |
| | | US 2020-0347269 A1 | 05 November 2020 |
| | | WO 2019-045479 A1 | 07 March 2019 |
| JP 2018-145368 A | 20 September 2018 | None | |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020190128579